Europäisches Patentamt

European Patent Office

Office européen des brevets

(19)

(11) Numéro de publication: **0 290 344**
**B1**

(12) **FASCICULE DE BREVET EUROPEEN**

(51) Int. Cl.⁵: **B32B 17/10, C03C 27/12**

(45) Date de publication du fascicule du brevet:
**05.12.90**

(21) Numéro de dépôt: **88401095.0**

(22) Date de dépôt: **05.05.88**

(54) Procédé et dispositif pour le calandrage des vitrages feuilletés.

(30) Priorité: **07.05.87 FR 8706472**

(43) Date de publication de la demande:
**09.11.88 Bulletin 88/45**

(45) Mention de la délivrance du brevet:
**05.12.90 Bulletin 90/49**

(84) Etats contractants désignés:
**BE CH DE ES FR GB IT LI LU NL SE**

(56) Documents cités:
**FR-A- 1 120 145**
**FR-A- 1 175 487**
**FR-A- 2 548 659**
**GB-A- 1 162 943**

(73) Titulaire: **SAINT-GOBAIN VITRAGE INTERNATIONAL,
18, avenue d'Alsace, F-92400 Courbevoie(FR)**

(72) Inventeur: **Henquenet, Pierre, 1 Rue de Savoie,
F-60150 Thourotte(FR)**

(74) Mandataire: **Muller, René et al, SAINT-GOBAIN
RECHERCHE 39, quai Lucien Lefranc,
F-93304 Aubervilliers(FR)**

ACTORUM AG

## Description

La présente invention concerne la fabrication des vitrages feuilletés et en particulier un procédé et un dispositif pour l'assemblage des éléments constitutifs d'un vitrage feuilleté par calandrage, c'est-à-dire par passage de l'empilage, désigné par la suite vitrage, entre deux séries de rouleaux de pressage.

Les dispositifs connus pour ce type d'assemblage sont généralement équipés de deux séries de galets ou rouleaux : une série de rouleaux inférieurs disposés les uns à côté des autres, leur position pouvant être réglée indépendamment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont aussi montés sur un cadre pouvant pivoter autour d'un axe horizontal, de sorte que les rouleaux restent perpendicularires au vitrage durant tout l'opération d'assemblage.

Bien que nécessitant habituellement une table d'entrée inclinée pour l'entrée du vitrage dans la calandreuse et une table de sortie inclinée pour sa sortie, ce dispositifs conviennent généralement pour l'assemblage des vitrages à double bombage lorsque ce double bombage n'est pas très accentué ou pour des vitrages de faibles dimensions. Pour des grands volumes et/ou à double courbure importante, ce type de dispositif n'est pas entièrement satisfaisant.

Dans la publication de brevet français 2 548 659 on a proposé de monter les rouleaux de pressage sur un chassis qui est muni d'un mouvement de pivotement autour de l'axe de pressage comme décrit précédemment, et qui en plus est muni d'un mouvement vertical de montée-baisse, l'ensemble des ces mouvements étant commandé par un dispositif de commande en fonction de données préalablement mémorisées. Lorsque les donnes représentant la surface courbe du verre feuilleté sont conservées dans le dispositif de commande, l'appareil peut assurer automatiquement un pressage de verre feuilleté de surface tridimensionnelle quelconque en fonction des données préalablement enregistrées sans que l'appareil nécessite une modification partielle.

Ce type de dispositif n'est pas entièrement satisfaisant, du fait de la complication résultant de la numérisation de tous les mouvements du châssis et surtout compte tenu des dispersions de formes et de dimensions entre les vitrages d'une même série, qui vont être à l'origine de contraintes pouvant provoquer des casses des vitrages.

L'invention propose un procédé d'assemblage par calandrage dans lequel ce n'est plus le dispositif qui commande et le vitrage qui est soumis et qui adapte sa position en fonction de la ligne de pressage de la calandreuse, mais c'est le vitrage qui commande et qui imprime les mouvements à la calandreuse, la ligne de pressage modifiant sa position en fonction de l'avancée du vitrage, par simple mise en jeu des forces dues à la pesanteur. Le dispositif peut ainsi s'adapter aux différences de formes et de dimensions d'une même série de vitrage, ce qui supprime les casses.

Ainsi, conformément à l'invention, l'assemblage par pressage du vitrage feuilleté est réalisé par passage entre deux séries de rouleaux de pressage appartenant à un équipage mobile en translation verticale en en rotation autour de la ligne de pressage, la position en inclinaison et en hauteur de l'équipage mobile étant déterminée essentiellement par les forces exercées par le vitrage au cours de son passage entre les rouleaux, l'équipage mobile étant équilibré dans le mouvement de rotation et dans le mouvement de montée-baisse, ces mouvements étant avantageusement contrôlés par des freins électromagnétiques.

Une des caractéristiques du procédé est que le vitrage reste en position horizontale sans l'action d'organes de maintien autres que les rouleaux de pressage et les convoyeurs d'amenée et de sortie du vitrage disposés en amont et en aval de la calandreuse.

L'invention concerne également un dispositif pour l'assemblage des vitrages par calandrage. Selon l'invention, ce dispositif comprend un équipage mobile, porteur d'une série de rouleaux de pressage supérieurs et une série de rouleaux de pressage inférieurs, les deux séries déterminant une ligne de pressage, au moins un des rouleaux étant moteur, cet équipage mobile étant monté sur des moyens le rendant pivotant autour de la ligne de pressage et des moyens lui permettant de se déplacer verticalement dans un mouvement de montée-baisse, et étant associé à des moyens l'équilibrant dans ses mouvements de rotation et de montée-baisse.

Selon une caractéristique de dispositif selon l'invention, les mouvements de l'équipage mobile sont contrôlés par des freins électromagnétiques qui avantageusement sont réglables par modification des fréquences et des durées des impulsions de freinage.

Selon une autre caractéristique du dispositif, les moyens équilibrant l'équipage mobile dans ses deux mouvement sont des contrepoids.

Le dispositif selon l'invention concerne également les transporteurs d'entrée et de sortie. Selon une caractéristique du dispositif ces transporteurs comprennent une partie mobile longitudinalement, cette partie comprenant elle-même deux courroies sans fin de transport. Cette partie mobile est conçue pour pouvoir avantageusement s'approcher de la calandreuse lors de la phase d'entrée du vitrage dans la ligne de pressage, et s'en éloigner afin de dégager l'espace utile pour les basculement de l'équipage mobile. Ces convoyeurs comprennent aussi une partie fixe par rapport à la direction de la ligne d'assemblage, mais qui porte des galets fous, éclipsables, qui, en position basse, sont éclipsés sous le niveau des courroies de transport et qui en position haute viennent supporter le vitrage au-dessus du niveau des courroies, lorsqu'il est déjà saisi par la calandreuse.

D'autres avantages et caractéristiques de l'invention apparaitront dans la description suivante d'une réalisation du dispositif selon l'invention, en relation avec les figures.

La figure 1 représente une calandreuse conforme à l'invention, dans une vue de face, en élévation.

La figure 2 est une vue d'un côté de la calandreuse, représentée sur la figure 1.

La figure 3 est une vue de l'autre côté de la calandreuse représentée sur la figure 1.

Les figures 4a, 4 b et 4 c représentent le fonctionnement de la calandreuse lié à l'avancement d'un vitrage dans la calandreuse.

La figure 5 représente la phase d'entrée d'un vitrage dans la calandreuse, dans un autre mode de fonctionnement.

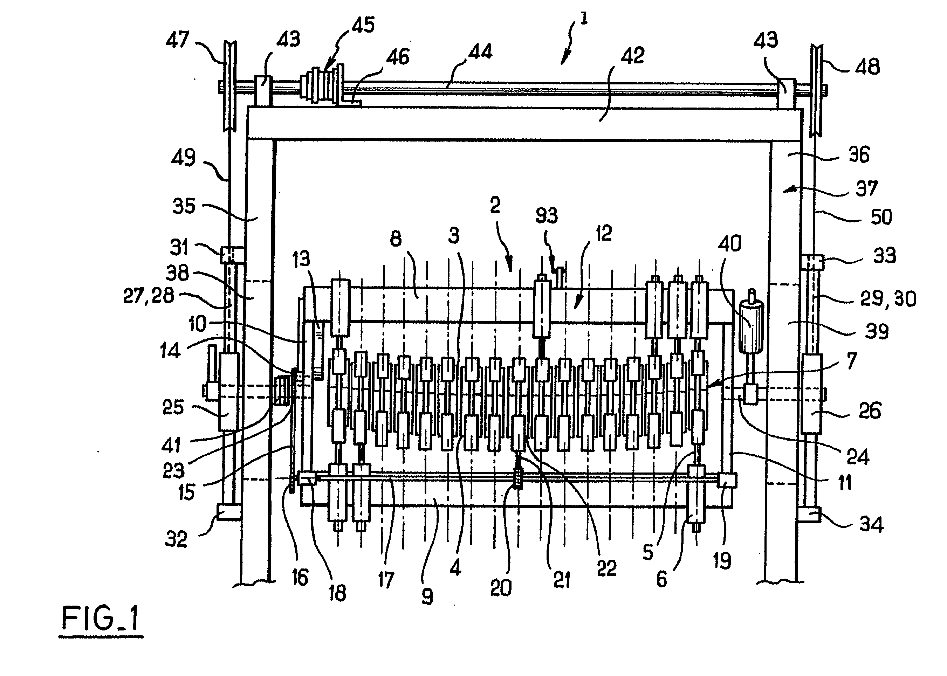

Le dispositif selon l'invention représenté sur la figure 1 est formé d'une calandreuse 1 ayant un équipage mobile 2 comprenant une série de rouleaux supérieurs 3 de pressage et une série de rouleaux inférieurs 4 de pressage. Chaque rouleau est monté par paire au bout d'une tige 5 faisant partie d'un ensemble de réglage 6 permettant le réglage de la position du rouleau selon la courbure désirée pour la ligne de pressage 7, les rouleaux supérieurs et les rouleaux inférieurs étant appliqués les uns contre les autres, par des systèmes élastiques faisant partie de l'ensemble de réglage 6. L'ensemble de réglage peut aussi régler le rouleau en inclinaison (non représenté sur la figure) pour le disposer perpendiculairement à la courbure transversale désirée. Les ensembles de réglage pour les rouleaux supérieurs 3 sont supportés par une traverse 8 horizontale supérieure. De même, les ensembles de réglage pour les rouleaux inférieurs 4 sont supportés par une traverse horizontale inférieure 9. Les extrémités des traverses supérieure 8 et inférieure 9 sont reliées entre-elles par deux montants 10, 11, de manière à former un cadre 12 entourant l'ensemble des rouleaux de pressage.

Sur le cadre 12 est fixé un moteur électrique 13 actionnant un pignon 14 relié par une chaine 15 à un second pignon 16 disposé au bout d'un arbre 17, monté sur deux paliers 18, 19, solidaires du cadre 12. L'arbre 17 entraine par l'intermédiaire d'un pignon 20 et d'une chaine 21, une paire de rouleaux inférieurs moteurs 22, disposée au centre de la caladreuse.

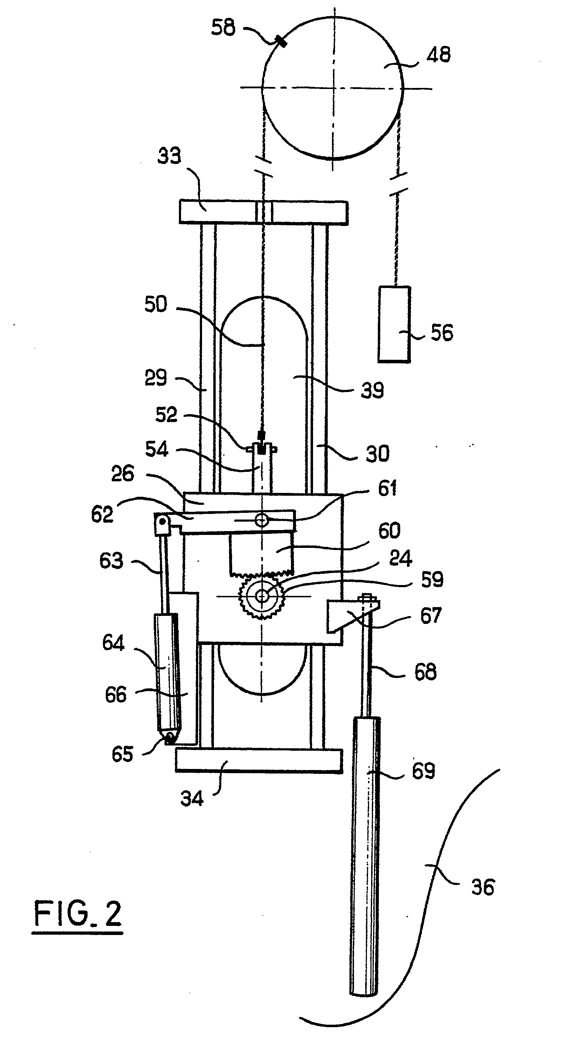

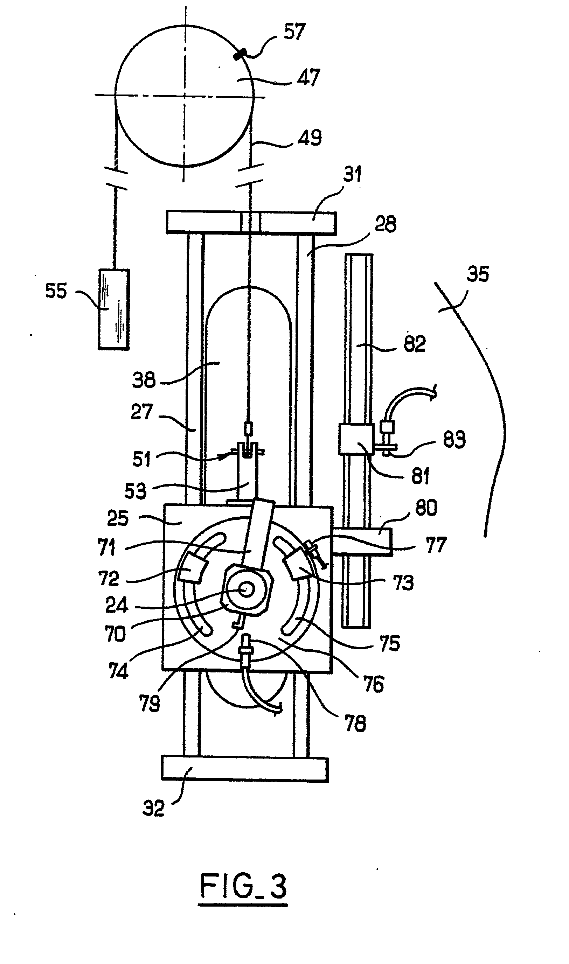

L'équipage mobile 2 est monté pivotant autour de deux axes horizontaux et alignés 23, 24, s'emmenchant d'un côté dans les deux montants 10, 11 du cadre, et de l'autre côté dans deux coulisseaux verticaux 25, 26 montés coulissant chacun le long de deux colonnes à billes verticales 27, 28, 29, 30, supportées à leurs extrémités par des barres horizontales 31, 32, 33, 34, fixées aux deux montants latéraux 35, 36 du bâti 37. Des fenêtres 38, 39 sont prévues dans les deux montants 35, 36, pour permettre le passage des deux axes 23, 24 et leur déplacement vertical correspondant au mouvement de montée-baisse de l'équipage mobile 2. Un contrepoids 40 équilibrant le mouvement de basculement de l'équipage mobile est monté sur l'axe 24. Bien entendu d'autres contrepoids peuvent être prévus, notamment sur le cadre 12. L'axe 23 porte un frein électromagnétique 41 dont la fonction est de contrôler le mouvement de basculement de l'équipage mobile comme décrit par la suite. Les deux montants latéraux 35, 36 du bâti sont surmontés d'une traverse horizontale 42 sur laquelle deux paliers 43 portent un arbre horizontal 44. Un frein électromagnétique 45, fixé à équerre 46, solidaire de la traverse 42, entoure l'arbre 44, et intervient sur la vitesse de montée-baisse de l'équipage mobile comme décrit par la suite. Aux deux bouts de l'arbre 44, sont montés solidaires en rotation, deux poulies 47, 48. Dans la gorge de chaque poulie s'enroule un cable 49, 50 dont une extrémité est liée à un axe 51, 52 porté par une oreille 53, 54 fixée sur la partie supérieure de chaque coulisseau, comme représenté sur les figures 2 et 3, alors que l'autre extrémité est liée à un contre-poids 55, 56, équilibrant le poids de l'équipage mobile. Des brides 57, 58 bloquent les cables dans les poulies afin d'éviter leur glissement.

Les figures 2 et 3 représentent le dispositif dans des vues latérales, chaque figure correspondant à un côté. Comme représenté sur la figure 2, autour de l'axe 24 est monté solidairement une roue dentée 59, sur laquelle s'engrène un secteur de pignon 60 monté autour d'un axe 61 porté par le coulisseau 26, et fixé à un levier 62, relié à la tige 63 d'un vérin avec chape 64.

L'extrémité du corps du vérin avec chape 64 est montée sur un axe 65, porté par une plaque 66 solidaire du coulisseau 26. L'action du vérin 64 provoque le basculement de l'équipage mobile, 2, comme décrit par la suite. Sur le coulisseau 26 est fixée un équerre 67 à laquelle est attachée la tige 68 d'un autre vérin 69 dont le corps vertical est solidaire du montant latéral 36 du bâti 37. Ce vérin 69 actionne le mouvement de montée-baisse de l'équipage mobile 2 comme décrit par le suite.

Comme représenté sur la figure 3, sur l'axe 24 pivotant dans le coulisseau 25, est monté, solidairement, une platine 70 portant un bras pivotant 71 déterminant l'amplitude du mouvement de basculement de l'équipage mobile 2, en venant, en bout de course, en butée de chaque côté sur des butées 72, 73 dont la position est réglable par un déplacement circulaire centré sur l'axe 24 le long de rainures 74, 75 portées par un disque 76 solidaire du coulisseau 25.

Sur la butée 73 est montée un détecteur 77 pour la position du bras 71. Un second détecteur 78 est placé sur l'axe vertical du disque 76, et sert à repérer le passage d'un doigt 79 porté par la platine 70 du côté opposé au bras 71, au moment où ce bras 71 est dans l'axe vertical, ce qui correspond au passage à la verticale de l'équipage mobile 2. Sur un côté latéral du coulisseau 25 est fixé une pièce 80 qui, en bout de la course de montée de l'équipage mobile vient au contact d'une butée 81 dont la position est réglable par coulissement le long d'une glissière verticale 82 fixée sur le montant latéral 35 du bâti 37. Sur la butée 81 est également monté un détecteur 83 repérant l'approche de la pièce 80 solidaire du coulisseau 25.

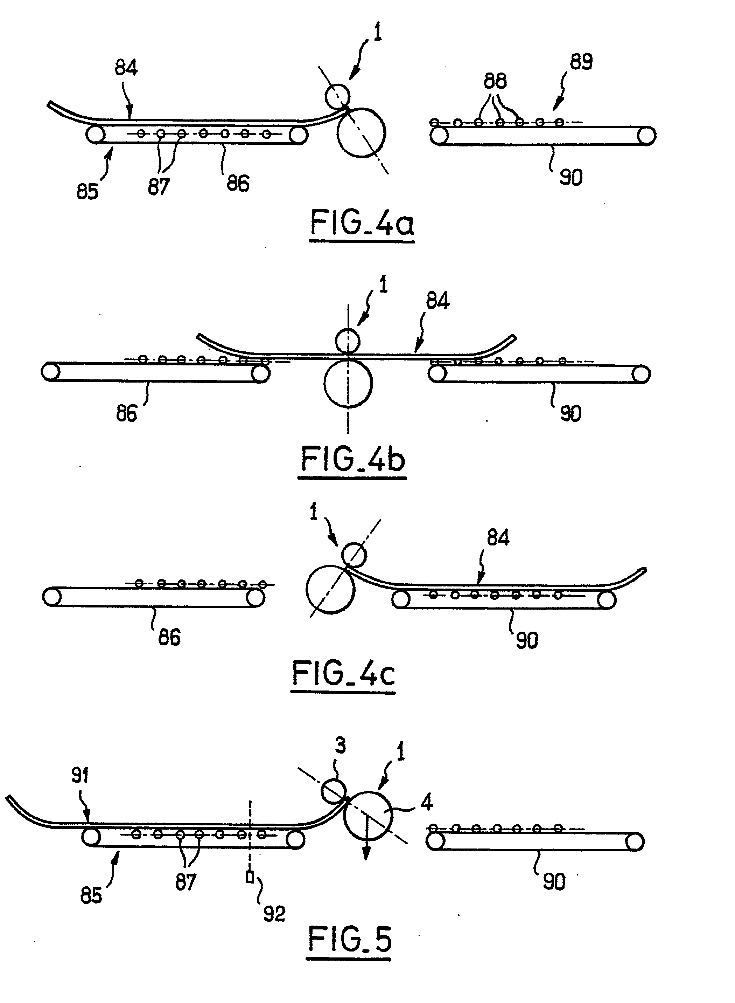

Le fonctionnement du dispositif est maintenant décrit en faisant référence aux figures et en particulier aux figures 4a, 4b et 4c.

Le dispositif est réglé au préalable de la façon suivante : la position transversale de la calandreuse est réglée par un déplacement latéral grâce au montage, non représenté sur les figures, de la calandreuse sur des roulettes, de façon à ce que la partie d'extrémité du vitrage pénètre dans la calandreuse à l'emplacement des rouleaux monteurs. On règle la position des différents rouleaux de pressage de façon à obtenir une ligne de pressage correspondant approximativement à la courbure transversale moyenne du vitrage. On règle la position des butées 72, 73 limitant le basculement de l'équipage mobile, par déplacement le long des rainures 74, 75, et la position de la butée 81 limitant le déplacement vertical de l'équipage mobile, par coulissement le long de la glissière verticale 82.

Sur la figure 4a qui représente l'entrée du vitrage dans la calandreuse, l'équipage mobile 2 est en position haute et il est basculé dans le sens où les rouleaux supérieurs sont dans un plan en amont des rouleaux inférieurs. Pour obtenir cette position, les deux vérins 64, 69 ont été préalablement mis en action. Le vérin de basculement 64, ayant sa tige 63 en bout de course de sortie et le vérin de montée-baisse 69 ayant de même sa tige 68 en bout de course de sortie. Les positions étant contrôlées par les butées 73, 81.

Le vitrage 84 constitué d'un empilage des éléments à assembler par pressage est amené par un transporteur horizontal 85 disposé en amont de la calandreuse. Dans lacourse d'approche du vitrage, celui-ci repose sur les courroies sans fin 86 appartenant à la partie mobile du transporteur 85 qui se trouve alors en position rapprochée de la calandreuse. Lorsque le vitrage 84 est pris entre les deux séries de rouleaux, il est repéré par un détecteur 93, disposé au dessus de la tige d'un des rouleaux supérieurs, qui détecte la montée de la tige du rouleau sous l'action du vitrage lors de son engagement entre les rouleaux. La détection de l'entrée du vitrage libère la pression dans le vérin de basculement 64 ainsi que la pression dans le vérin de montée-baisse 69 qui maintenaient l'équipage mobile 2 d'une part dans la poposition inclinée et d'autre part dans sa position haute.

Dès que le vitrage est pris entre les rouleaux de la calandreuse ce sont alors les rouleaux moteurs qui impriment le mouvement d'avance du vitrage. Au niveau du transporteur amont 85, des galets fous 87 initialement éclipsés sont levés pour supporter le vitrage 84 à un niveau supérieur à celui des courroies de transport 86. On évite ainsi tout antagonisme de mouvement entre les rouleaux moteurs 22 de la calandreuse et les courroies 86. La partie mobile du transporteur s'écarte en arrière afin de ne pas géner le mouvement de basculement de l'équipage mobile.

Au fur et à mesure de l'avance du vitrage 84 entre les rouleaux supérieurs 3 et inférieurs 4 qui eux-mêmes sont entraînés en rotation par l'avance du vitrage, le mouvement étant imprimé par les rouleaux moteurs 22, l'équipage mobile 2 descend et l'angle de basculement diminue sous l'action du vitrage, les mouvements étant contrôlés par les deux freins électromagnétiques 41, 45 et les contre-poids équilibrant les masses en mouvement. Le double mouvement se poursuit jusqu'à ce que le vitrage soit à moitié engagé dans les galets de pressage, ce qui correspond alors à la position vertical de l'équipage mobile et aussi à sa position basse, telle que représentée sur la figure 4 b, cette position étant dans le plan de niveau des galets fous des transporteurs amont et aval.

Au passage à la position verticale, le doigt 79 monté sur la platine 70 est repéré par le détecteur 78 qui va déclencher l'action du vérin 69, cette action étant toujours régulée par le frein électromagnétique 45 et l'équilibre des masses assurées par les contrepoids 57, 58. Dans la poursuite de l'avancée du vitrage entre les rouleaux, l'équipage mobile monte sous l'action du vérin 69, en fonction de la courbure lontitudinale du vitrage. Le mouvement de basculement dans le sens opposé à celui du début de l'opération de calandrage se poursuit sous l'action d'avance du vitrage, en étant toujours contrôlé par le frein électromagnétique 41 et équilibré par le contrepoids 40. A la fin de l'opération de pressage comme rerprésenté sur la figure 4c, l'équipage mobile est dans la positin de basculement maximum contrôlée par la butée 73 et en position haute contrôlée par la butée 81. Le vérin de basculement 64 a sa tige 63 en position rentrée et le vérin de montée-baisse 69 a sa tige 68 en position sortie.

A la sortie de la calandreuse, le vitrage est recueilli par les galets fous 88 du transporteur aval 89 jusqu'à ce que le vitrage quitte la calandreuse. Les galets fous s'éclipsent alors sous le niveau des courroies de transport 90 du transporteur aval et le vitrage est pris par ces courroies de transport 90 qui l'entrainent vers le poste suivant de la ligne d'assemblage.

Lorsque le vitrage est pris par les courroies de transport 90 du transporteur aval 89, l'équipage mobile 2 rest en position haute mais bascule sous l'action du vérin 64 pour revenir à la position inclinée du début du calandrage. Le mouvement de rappel en rotation est toujours contrôlé par le frein électromagnétique, compte tenu des masses en mouvement. Le dispositif est alors prêt pour un nouveau calandrage.

Le fonctionnement du dispositif peut bien entendu être modifié si la forme du vitrage et ses dimensions le nécessitent. On peut par exemple prévoir de modifier la vitesse de calandrage selon la partie du vitrage qui est prise entre les rouleaux. Ainsi généralement la première phase et la dermière phase du calandrage qui correspondent aux parties avant et arrière du vitrage se déroulent à une vitesse plus faible que la vitesse de la phase d'assemblage correspondand à l'assemblage de la partie centrale du vitrage.

On peut aussi, le cas échéant, modifier l'instant du déclenchement des mouvements de l'équipage mobile en commençant par exemple le mouvement de descente de l'équipage mobile avant l'entrée du vitrage dans la ligne de pressage entre les galets. C'est le cas par exemple lors de l'assemblage d'un vitrage 91 fortement bombé dans le sens longitudinal. L'arrivée du vitrage peut être repérée par un détecteur 92 disposé entre les galets 87 du transporteur amont 85 qui va déclencher plus tôt que précédemment les vérins de montée-baisse, ce qui permet à l'équipage mobile de descendre sur l'extrémité du vitrage comme représenté sur la figure 5. Ce type de fonctionnement nécessite une parfaite synchronisation du mouvement d'avance du vitrage et de descente de l'équipage mobile.

Dans cette variante defonctionnement, le déclenchement du mouvement de basculement peut toujours être commandé par le détecteur détectant le montée de la tige d'un rouleau à l'entrée du vitrage dans la calandreuse. Ce mode de fonctionnement peut être envisagé lorsque le diamètre des rouleaux supérieurs 3 est plus petit que le diamètre des rouleaux inférieurs 4, ce qui est généralement le cas.

**Revendications**

1. Procédé pour l'assemblage par pressage d'un vitrage feuilleté dans lequel on fait passer le vitrage feuilleté entre deux séries de rouleaux de pressage appartenant à un équipage mobile en translation verticale et en rotation autour de la ligne de pressage, caractérisé en ce que la position de l'équipage mobile en inclinaison et en hauteur au cours du pressage est déterminée essentiellement par les forces exercées par le vitrage au cours de son passage entre les rouleaux, l'équipage mobile étant équilibré dans le mouvement de rotation et dans le mouvement de montée-baisse.

2. Procédé selon la revendication 1, caractérisé en ce que les mouvements sont contrôlés par des freins électromagnétiques.

3. Procédé selon une des revendications 1 ou 2, caractérisé en ce que durant toute l'opération le vitrage reste en positon horizontale sans l'action d'organes de maintien autres que les rouleaux de pressage et des transporteurs amont et aval pour l'entrée et la sortie du vitrage.

4. Dispositif pour l'assemblage par pressage d'un vitrage feuilleté (84), comprenant un équipage mobile (2) porteur de deux séries de rouleaux de pressage (3, 4) avec au moins un de ces rouleaux étant moteur (22), l'équipage mobile étant monté sur des moyens (23, 24) le rendant pivotant autour de la ligne de pressage et des moyens (25, 26) lui permettant de se déplacer dans un mouvement de montée-baisse, caractérisé en ce que l'équipage mobile (2) est associé à des moyens contrôlant ces deux mouvements et à des moyens l'équilibrant dans ces deux mouvements.

5. Dispositif selon la revendication 4, caractérisé en ce que les moyens contrôlant les deux mouvements de l'équipage mobile sont des freins électromagnétiques (41, 45).

6. Dispositif selon une des revendications 4 ou 5, caractérisé en ce que que les moyens équilibrant l'équipage mobile sont des contrepoids (40, 55, 56).

7. Dispositif selon une des revendications 4 à 6, caractérisé en ce que l'équipage mobile est monté pivotant autour de deux axes horizontaux (23, 24), porté par deux coulisseaux verticaux (25, 26), associés à des systèmes de contre-poids (40, 55, 56) et des freins électromagnétiques.

8. Dispositif selon une des revendications 4 à 7, caractérisé en ce qu'il est muni d'un vérin (69) agissant dans le mouvement de montée-baisse de l'équipage mobile et d'un vérin (64) pour le rappel dans une position inclinée de cet équipage.

9. Dispositif selon une des revendications 4 à 8, caractérisé en ce qu'il comprend un transporteur amont (85) et un transporteur aval (89) muni chacun d'eux d'une partie mobile et d'une partie fixe dans le sens longitudinal de l'assemblage.

10. Dispositif selon une des revendication 9, caractérisé en ce que la partie mobile des tranporteurs comprend des courroies de transport sans fin (86, 90) pouvant s'approcher ou s'éloigner de la calandreuse.

11. Dispositif selon une des revendications 9 ou 10, caractérisé en ce que la partie fixe des transporteurs comprend des galets fous éclipsables (87, 88), qui en position basse sont éclipsés sous le niveau des courroies de transport (86, 90) et qui en position haute viennent supporter le vitrage lorsqu'il est déjà saisi par la calandreuse, à un niveau supérieur à celui des courroies de transport.

12. Dispositif selon une des revendications 4 à 11, caractérisé en ce qu'il est muni d'un détecteur unique d'clenchant les mouvements de l'équipage mobile.

13. Dispositif selon une des revendications 4 à 11, caractérisé en ce qu'il est muni d'un détecteur déclenchant le mouvement de baisse de l'équipage mobile avant l'engagement du vitrage dans la calandreuse.

14. Dispositif selon une des revendications 4 à 13, caractérisé en ce que la calandreuse est réglable dans une position transversale.

**Patentansprüche**

1. Verfahren zum Zusammenpressen eines Verbundglases, bei dem man das Verbundglas zwischen zwei Reihen von Druckwalzen passieren läßt, die zu einer beweglichen Einrichtung gehören, die vertikal verschiebbar und um eine Drucklinie herum drehbar ist, dadurch gekennzeichnet, daß die Position der beweglichen Einrichtung in bezug auf Neigung und Höhe während des Pressens im wesentlichen durch die Kräfte bestimmt wird, die durch das Glas während seines Durchganges zwischen den Walzen ausgeübt werden, wobei die bewegliche Vorrichtung in der Drehbewegung und in der Auf-und-Abbewegung ausgeglichen wird.

2. Verfahren nach Anspruch 1, dadurch gekennzeichnet, daß die Bewegungen durch elektromagnetische Bremsen kontrolliert werden.

3. Verfahren nach einem der Ansprüche 1 oder 2, dadurch gekennzeichnet, daß das Glas während des gesamten Vorganges in der horizontalen Lage verbleibt, ohne daß andere Halteorgane als die Druckwalzen und die stromaufwärts und stromabwärts für den Eintritt und den Austritt des Glases liegenden Transportorgane einwirken.

4. Vorrichtung zum Zusammenpressen eines Verbundglases (84), umfassend eine bewegliche Einrichtung (2), die zwei Reihen von Druckwalzen (3, 4) trägt, wobei mindestens eine der Walzen (22) angetrieben ist und die bewegliche Einrichtung auf Mitteln (23, 24), die sie um die Drucklinie drehbar machen und auf Mitteln (25, 26), die ihre Verschiebung in einer Auf-und-Abbewegung gestatten, montiert ist, dadurch gekennzeichnet, daß die bewegliche Einrichtung (2) mit Mitteln versehen ist, die diese beiden Bewegungen kontrollieren und mit Mitteln, die sie in diesen beiden Bewegungen im Gleichgewicht halten.

5. Vorrichtung nach Anspruch 4, dadurch gekennzeichnet, daß die Mittel, die die beiden Bewegungen der beweglichen Einrichtung kontrollieren, elektromagnetische Bremsen (41, 45) sind.

6. Vorrichtung nach einem der Ansprüche 4 oder 5, dadurch gekennzeichnet, daß die Mittel, die die bewegliche Einrichtung im Gleichgewicht halten, Gegengewichte (40, 55, 56) sind.

7. Vorrichtung nach einem der Ansprüche 4 bis 6, dadurch gekennzeichnet, daß die bewegliche Einrichtung um zwei horizontale Achsen (23, 24) drehbar montiert ist, die durch zwei Vertikalschieber (25, 26) getragen sind, die mit den Systemen der Gegengewichte (40, 55, 56) und der elektromagnetischen Bremsen verbunden sind.

8. Vorrichtung nach einem der Ansprüche 4 bis 7, dadurch gekennzeichnet, daß sie mit einem Zylinder (69) versehen ist, der in der Auf-und-Abbewegung der beweglichen Einrichtung wirksam ist und mit einem Zylinder (64), um sie in eine Position zurückzustellen, die zu dieser Einrichtung geneigt ist.

9. Vorrichtung nach einem der Ansprüche 4 bis 8, dadurch gekennzeichnet, daß sie ein stromaufwärts gelegenes Transportorgan (85) und stromabwärts gelegenes Transportorgan (89) umfaßt, die jeweils mit einem beweglichen Teil und einem festliegenden Teil in Längsrichtung des Zusammenpressens versehen sind.

10. Vorrichtung nach Anspruch 9, dadurch gekennzeichnet, daß der bewegliche Teil der Transportorgane endlose Transportbänder (86, 90) umfaßt, die sich der Kalanderwalze nähern oder sich von ihr entfernen können.

11. Vorrichtung nach einem der Ansprüche 9 oder 10, dadurch gekennzeichnet, daß der festliegende Teil der Transportorgane versenkbare Schlepprollen (87, 88) umfaßt, die in der unteren Position oder das Niveau der Transportbänder (86, 90) versenkt sind und in der oberen Position das Glas noch auf einem Niveau oberhalb dem der Transportbänder tragen, wenn es schon von der Kalanderwalze ergriffen ist.

12. Vorrichtung nach einem der Ansprüche 4 bis 11, dadurch gekennzeichnet, daß sie mit einem einzigen Detektor versehen ist, der die Bewegungen der beweglichen Einrichtung auslöst.

13. Vorrichtung nach einem der Ansprüche 4 bis 11, dadurch gekennzeichnet, daß sie mit einem Detektor versehen ist, der die Abwärtsbewegung der beweglichen Einrichtung vor dem Eintritt des Glases in die Kalanderwalze auslöst.

14. Vorrichtung nach einem der Ansprüche 4 bis 13, dadurch gekennzeichnet, daß die Kalanderwalze in einer Querposition regelbar ist.

## Claims

1. Process for the assembly by pressing of a laminated glass plate, in which the laminated glass plate is passed between two series of pressing rollers belonging to a means moving in vertical translation and rotation about the pressing line, characterized in that the position of the moving means in inclination and in height during the pressing is essentially determined by the forces exerted by the glass plate during its passage between the rollers, the moving equipment being balanced in the rotary movement and in the rising and falling movement.

2. Process according to claim 1, characterized in that the movements are controlled by electromagnetic brakes.

3. Process according to one of the claims 1 or 2, characterized in that during the operation the glass plate remains in the horizontal position without any action of holding members, apart from the pressing rollers and upstream and downstream conveyors for the entry and exit of the glass plate.

4. Apparatus for the assembly by pressing of a laminated glass plate (84), which comprises a moving means (2) carrying two series of pressing rollers (3, 4) with at least one of the said rollers being motive (22), the moving means being mounted on means (23, 24) pivoting it about the pressing line and means (25, 26) giving it a rising and falling movement, characterized in that the moving means (2) is associated with means controlling these two movements and means balancing it in said two movements.

5. Apparatus according to claim 4, characterized in that the means controlling the two movements of the moving means are electromagnetic brakes (41, 45).

6. Apparatus according to one of the claims 4 or 5, characterized in that the means balancing the moving means are counterweights (40, 55, 56).

7. Apparatus according to one of the claims 4 to 6, characterized in that the moving means is mounted so as to pivot about two horizontal spindles (23, 24) carried by two vertical slides (25, 26), which are associated with systems of counterweights (40, 55, 56) and electromagnetic brakes.

8. Apparatus according to one of the claims 4 to 7, characterized in that it is provided with a jack (69) acting in the rising and falling movement of the moving equipment and a jack (64) for the return of said means to an inclined position.

9. Apparatus according to one of the claims 4 to 8, characterized in that it comprises an upstream conveyor (85) and a downstream conveyor (89), each of them being provided with a moving part and a fixed part in the longitudinal direction of the assembly.

10. Apparatus according to claim 9, characterized in that the moving part of the conveyors comprises endless conveyor belts (86, 90) which can move away from or towards the calender.

11. Apparatus according to one of the claims 9 or 10, characterized in that the fixed part of the conveyors comprises retractable idle rollers (87, 88), which in the lowered position are retracted beneath the level of the conveyor belts (86, 90) and which in the upper position support the glass plate when it has already been seized by the calender, at a level higher than that of the conveyor belts.

12. Apparatus according to one of the claims 4 to 11, characterized in that it is provided with a single detector initiating the movements of the moving means.

13. Apparatus according to one of the claims 4 to 11, characterized in that it is provided with a detector initiating the lowering movement of the moving means prior to the engagement of the glass plate in the calender.

14. Apparatus according to one of the claims 4 to 13, characterized in that the calender is regulatable in a transverse position.

FIG_1

EP 0 290 344 B1

FIG. 2

FIG_3

FIG.4a

FIG.4b

FIG.4c

FIG.5